# EUROPÄISCHE PATENTSCHRIFT

(11) **EP 1 687 142 B1**
(45) Veröffentlichungstag und Bekanntmachung des Hinweises auf die Patenterteilung: **16.01.2008**
(21) Anmeldenummer: 04818763.7
(22) Anmeldetag: 09.11.2004
(51) Int. Cl.: B32B 27/36, C08G 64/06, C08L 69/00

(54) **POLYCARBONAT-MASSIVFORMKÖRPER MIT VERBESSERTEN OPTISCHEN UND VERARBEITUNGSTECHNISCHEN EIGENSCHAFTEN**
SOLID MOLDED POLYCARBONATE MEMBER HAVING IMPROVED OPTICAL AND PROCESSING CHARACTERISTICS
CORPS MOULES MASSIFS EN POLYCARBONATE A PROPRIETES OPTIQUES ET DE TRAITEMENT AMELIOREES

(30) Priorität: 21.11.2003 DE 10354546
(43) Veröffentlichungstag der Anmeldung: 09.08.2006
(73) Patentinhaber: Bayer MaterialScience AG, 51368 Leverkusen (DE)
(72) Erfinder: ANDERS, Siegfried, 51147 Köln (DE); GORNY, Rüdiger, Moon Twp., Pennsylvania 15108 (US); SCHWARZ, Peter, 47800 Krefeld (DE); RÜDIGER, Claus, 47798 Krefeld (DE); RÖHNER, Jürgen, 51069 Köln (DE)
(86) Internationale Anmeldenummer: PCT/EP2004/012645
(87) Internationale Veröffentlichungsnummer: WO 2005/049320

(56) Entgegenhaltungen:
- EP-A- 0 716 919

## Beschreibung

Die Erfindung betrifft Polycarbonat-Massivformkörper mit verbesserten optischen und verarbeitungstechnischen Eigenschaften.

Polycarbonat-Massivformkörper, insbesondere Polycarbonat-Massivplatten, werden durch Extrusion oder Spritzguss hergestellt. Größere Formkörper, wie großflächige Kraftfahrzeugverglasungen oder Platten für Bedachungen und andere architektonische Anwendungen, müssen durch Extrusion hergestellt werden, weil die Erzeugung durch Spritzguss aus technischen Gründen nicht oder zumindest nicht wirtschaftlich erfolgen kann.

Zur Extrusion wird ein Polycarbonat-Granulat dem Extruder zugeführt und im Plastifizierungssystem des Extruders aufgeschmolzen. Die Kunststoffschmelze wird durch eine Breitschlitzdüse gedrückt und dabei vorgeformt, im Walzenspalt eines Glättkalanders in die gewünschte endgültige Form gebracht und durch wechselseitige Kühlung auf Glättwalzen und an der Umgebungsluft formfixiert. Die zur Extrusion verwendeten Polycarbonate mit hoher Schmelzeviskosität werden üblicherweise bei Schmelzetemperaturen von 260 bis 320 °C verarbeitet, entsprechend werden die Zylindertemperaturen des Plastifizierzylinders sowie die Düsentemperaturen eingestellt.

Die Oberflächen der erzeugten Platte sind prozessbedingt nicht vollkommen eben, sondern weisen Unregelmäßigkeiten auf. Diese führen zu optischen Verzerrungen. Für verschiedene Anwendungen, beispielsweise Verscheibungen von Kraftfahrzeugen, sind solche optischen Verzerrungen unerwünscht, weshalb in der Vergangenheit bereits eine Reihe von Maßnahmen vorgeschlagen wurde, die optischen Eigenschaften von extrudierten Polycarbonatformkörpern zu verbessern.

Zur Verringerung von Spiegelungen und optischen Störungen von strukturierten, wetterfesten Platten schlägt die EP 0 275 252 A eine Polycarbonat-Verbundplatte vor, auf deren Oberfläche eine Schutzbeschichtung aufgebracht ist, die ein Methacrylat-Copolymer enthält.

Die EP 0 114 290 A beschreibt thermoplastische Copolyestercarbonat-Formmassen, die 1 bis 15 Gew.-% eines verzweigten Polycarbonats und 15 bis 99 Gew.-% eines Copolyestercarbonatharzes enthalten. Durch dieses Gemisch sollen die Verarbeitungseigenschaften und die Hydrolysebeständigkeit sowie die Schlagfestigkeit verbessert werden. Es wird festgestellt, dass die optische Transparenz des Polymers durch den Einsatz dieser Formmasse nicht wesentlich beeinträchtigt wird.

EP 1 265 943 beschreibt Polycarbonat-Massivformkörper mit verbesserten optischen Eigenschaften, die aus einem verzweigten Polycarbonat eines mittleren Molekulargewichts M̅_{w} von 25.000 - 40.000 erhalten werden. Andere Möglichkeiten, das Ziel zu erreichen, werden nicht genannt.

Bei dem bereits beschriebenen Extrusionsprozess dampfen aus der Kunststoffschmelze flüchtige Bestandteile aus, sobald die Schmelze aus der Breitschlitzdüse austritt. Insbesondere handelt es sich dabei um UV-Absorber, die im Falle einer coextrudierten Platte in relativ hoher Konzentration in den coextrudierten dünnen Schichten auf den Plattenoberflächen enthalten sind. Diese flüchtigen Bestandteile schlagen sich teilweise auf den Walzen des Glättkalanders nieder und bilden dort einen im Laufe der Zeit zunehmenden Belag, der die Oberflächenqualität der hergestellten Platte zunehmend vermindert.

EP 0 649 724 beschreibt ein Verfahren zur Herstellung von mehrschichtigen Kunststofftafeln aus verzweigtem Polycarbonat mit einem mittleren Molekulargewicht M̅_{W} von 27.000 - 29.500, bei dem das Ausdampfen von UV-Absorbern reduziert wird, so dass längere Zeit ohne Unterbrechung extrudiert werden kann, obwohl die Deckschicht 1 - 15 Gew.-% eines UV-Absorbers enthält. Andere Möglichkeiten, das Ausdampfen von UV-Absorber zu reduzieren, werden nicht genannt.

Die der Erfindung zugrundeliegende Aufgabe bestand mithin darin, durch Extrusion transparente Polycarbonat-Massivplatten mit derart verbesserten optischen Eigenschaften bereitzustellen, die z. B. den Einsatz in Kraftfahrzeugen zulassen. Weiterhin sollte die Ausdampfung flüchtiger Bestandteile reduziert und damit die Oberflächenqualität der Polycarbonat-Massivplatten verbessert werden.

Überraschend wurde festgestellt, dass diese Aufgabe durch Extrusion von Polycarbonatformmassen gelöst wird, die im Wesentlichen aus linearem Polycarbonat eines Molekulargewichts M̅_{w} von 28.000 bis 30.000, bestehen. Dadurch können die bisher üblichen optischen Verzerrungen der Platte wesentlich reduziert werden, die durch die unterschiedlichen an der Oberseite und an der Unterseite der extrudierten Platte wirkenden Kräfte verursacht werden.

Die erfindungsgemäßen, extrudierten Polycarbonat-Massivplatten, die aus der zuvor dargestellten Formmasse erhältlich sind, weisen einen Ablenkwinkel α_{ε} (min) nach DIN 52305-A-AS von ≤1,7, und einen Brechwert D_{ε} (min) nach DIN 52305-A-AZ von ≤ 0,04 auf.

Es wurde herausgefunden, dass der Ablenkwinkel α_{ε} um mehr als 30 %, und der Brechwert D_{ε} um mehr als 50 % verringert werden kann gegenüber in herkömmlicher Weise erhaltenen Platten.

Durch diese deutlich verbesserten optischen Eigenschaften ist es möglich, die erfindungsgemäßen Platten als Kraftfahrzeugverglasung einzusetzen.

Die erfIndungsgemäßen Polycarbonat-Massivplatten können ferner als Sicherheitsverscheibung, beispielsweise an Maschinen und in Stadien, als Verscheibung in Dächern, in Lärmschutzwänden und für Werbeflächen eingesetzt werden. Sie sind überall dort geeignet, wo großflächige Verscheibungen mit günstigen optischen Eigenschaften gewünscht werden.

Polycarbonate mit zu niedrigem Molekulargewicht, z.B. unter 25.000, sind für PC-Platten-Anwendungen wegen mangelnder Schlagzähigkeit nicht mehr geeignet.

Erfindungsgemäß geeignete lineare Polycarbonate können nach bekannten Verfahren hergestellt werden. Geeignete Verfahren zur Herstellung von Polycarbonaten sind beispielsweise die Herstellung aus Bisphenolen mit Phosgen nach dem Phasengrenzflächenverfahren oder aus Bisphenolen mit Phosgen nach dem Verfahren in homogener Phase, dem sogenannten Pyridinverfahren, oder aus Bisphenolen mit Kohlensäureestern nach dem Schmelzeumesterungsverfahren. Die Herstellungsverfahren sind beispielsweise beschrieben in H. Schnell; "Chemistry and Physis of Polycarbonates", Polymer Reviews, Band 9, S. 31-76, Interscience Publishers, New York, London, Sidney, 1964. Die genannten Herstellungsverfahren sind auch beschrieben in "Polycarbonates" in Enzyclopedia of Polymer Science and Engineering, Volume 11, Second Edition, 1988, Seiten 648 bis 718 und in "Polycarbonate" in Becker, Braun, Kunststoff-Handbuch, Band 3/1, Polycarbonate, Polyacetale, Polyester, Celluloseester, Carl Hanser Verlag München, Wien 1992, Seiten 117 bis 299.

Das Schmelzeumesterungsverfahren ist insbesondere beschrieben in H. Schnell, "Chemistry and Physis of Polycarbonates", Polymer Reviews, Band 9, S. 44 bis 51, Interscience Publishers, New York, Sidney, 1964 sowie in DE 1 031 512 A, US 3 022 272, US 5 340 905 und US 5 399 659.

Die erfindungsgemäß eingesetzten linearen Polycarbonate können dabei sowohl Homopolycarbonate als auch Copolycarbonate oder deren Gemische sein. Die Polycarbonate können teilweise oder vollständig durch aromatische Polyestercarbonate ersetzt sein.

Als Ausgangsverbindungen für die Herstellung der erfindungsgemäß eingesetzten linearen Polycarbonate bevorzugt eingesetzte Verbindungen sind Bisphenole der allgemeinen Formel (I)

HO-Z-OH (I)

worin
- Z: ein divalenter organischer Rest mit 6 bis 30 Kohlenstoffatomen ist, der eine oder mehrere aromatische Gruppen enthält.

Beispiele solcher Verbindungen sind Bisphenole, die zu der Gruppe der Dihydroxydiphenyle, Bis-(hydroxyphenyl)alkane, Indanbisphenole, Bis(hydroxyphenyl)ether, Bis(hydroxyphenyl)sulfone, Bis(hydroxyphenyl)ketone und α,α'-Bis(hydroxyphenyl)-diisopropylbenzole gehören.

Besonders bevorzugte Bisphenole, die zu den vorgenannten Verbindungsgruppen gehören, sind 2,2-Bis-(4-Hydroxyphenyl)-propan (Bisphenol-A), Tetraalkylbisphenol-A, 4,4-(meta-Phenylendi-isopropyl) diphenol (Bisphenol M), 4,4-(para-Phenylendlisopropyl)-diphenol, 1,1-Bis-(4-hydroxyphenyl)-3,3,5-trimethylcyclohexan (Bisphenol-TMC) sowie deren Gemische.

Die mittlere Molmasse der erfindungsgemäß zu verwendenden Polycarbonate kann zum Beispiel in bekannter Weise durch eine entsprechende Menge an Kettenabbrechern eingestellt werden. Die Kettenabbrecher können einzeln oder als Mischung verschiedener Kettenabbrecher eingesetzt werden.

Geeignete Kettenabbrecher sind sowohl Monophenole als auch Monocarbonsäuren. Geeignete Monophenole sind z. B. Phenol, p-Chlorphenol, p-tert.-Butylphenol, Cumylphenol oder 2,4,6-Tribromphenol sowie langkettige Alkylphenole wie 4-(1,1,3,3-Tetramethylbutyl)-phenol oder Monoalkylphenole oder Dialkylphenole mit insgesamt 8 bis 20 C-Atomen in den Alkylsubsitutenten wie 3,5-di-tert.-Butylphenol, p-tert.-Octylphneol, p-Dodecylphenol, 2-(3,5-Dimethyl-heptyl)-phenol oder 4-(3,5-Dimethyl-heptyl)-phenol. Geeignete Monocarbonsäuren sind Benzoesäure, Alkylbenzoesäuren und Halogenbenzoesäuren.

Die Menge an Kettenabbrecher zur Erzielung des gewünschten Molekulargewichtsbereichs liegt beim Phasengrenzflächenverfahren üblicherweise bei 2 bis 4 Mol-% Kettenabbrecher, bezogen auf Mol Bisphenol.

Die Bemessung der Kettenabbrechermenge erfolgt bei der Herstellung nach dem Umesterungsverfahren dadurch, dass man den Kohlensäurediester, beispielsweise Diphenylcarbonat, im Verhältnis zum Bisphenol in Abhängigkeit von den verwendeten Destillationskolonnen im Überschuss einsetzt, beispielsweise 102 bis 108 Mol Diphenylcarbonat pro 100 Mol Bisphenol.

Polyestercarbonate werden bevorzugt durch Umsetzung der bereits genannten Bisphenole, mindestens einer aromatischen Dicarbonsäure und gegebenenfalls Kohlensäureäquivalente erhalten. Geeignete aromatische Dicarbonsäuren sind beispielsweise Phthalsäure, Terephthalsäure, Isophthalsäure, 3,3'- oder 4,4'-Diphenyldicarbonsäure und Benzophenondicarbonsäuren. Ein Teil, bis zu 80 Mol-%, vorzugsweise von 20 bis 50 Mol-% der Carbonatgruppen in den Polycarbonaten können durch aromatische Dicarbonsäureester-Gruppen ersetzt sein.

Erfindungsgemäß bevorzugte Polycarbonate sind das Homopolycarbonat auf Basis von Bisphenol A, das Homopolycarbonat auf Basis von 1,1-Bis-(4-hydroxyphenyl)-3,3,5-trimethylcyclohexan und die Copolycarbonate auf Basis der beiden Monomere Bisphenol A und 1,1-Bis-(4-hydroxyphenyl)-3,3,5-trimethylcyclohexan und die Copolycarbonate auf Basis der beiden Monomere Bisphenol A und 4,4'-Dihydroxydiphenyl (DOD).

Das Homopolycarbonat auf Basis von Bisphenol A ist besonders bevorzugt.

Die erfindungsgemäß verwendete Formmasse kann zusätzlich zu dem linearen Polycarbonat Additive wie beispielsweise UV-Absorber sowie andere übliche Verarbeitungshilfsmittel insbesondere Entformungsmittel und Fließmittel sowie die für Polycarbonate üblichen Stabilisatoren insbesondere Thermostabilisatoren sowie Antistatika, Farbmittel, optische Aufheller und anorganische Pigmente enthalten.

UV-Absorber können in einer Menge von 0,05 bis 15 Gew.-%, vorzugsweise 0,1 bis 8 Gew.-%, bezogen auf das Gewicht des erfindungsgemäß verwendeten Polycarbonats, enthalten sein.

Geeignete UV-Absorber sind solche Verbindungen, die aufgrund ihres Absorptionsvermögens unterhalb 400 nm in der Lage sind, Polycarbonat wirksam vor UV-Licht zu schützen und ein Molekulargewicht von mehr als 370, vorzugsweise von 500 und mehr aufweisen.

Geeignete UV-Absorber sind insbesondere die in der WO 99/05205 beschriebenen Verbindungen der Formel (II) 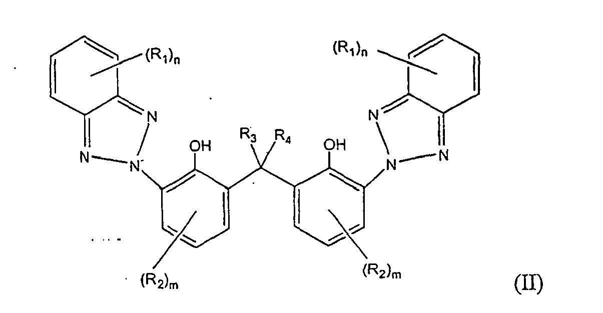 worin
- R¹ und R²: gleich oder verschieden sind und H, Halogen, C₁-C₁₀-Alkyl, C₅-C₁₀-Cycloalkyl, C₇-C₁₃-Aralkyl, C₆-C₁₄-Aryl, -OR⁵ oder -(CO)-O-R⁵ bedeuten mit R⁵ = H oder C₁-C₄-Alkyl,
- R³ und R⁴: ebenfalls gleich oder verschieden sind und H, C₁-C₄-Alkyl, C₅-C₆-Cycloalkyl, Benzyl oder C₆-C₁₄-Aryl bedeuten,
- m: 1, 2 oder 3 ist und
- n: 1, 2, 3 oder 4 ist,
sowie solche der Formel (III) 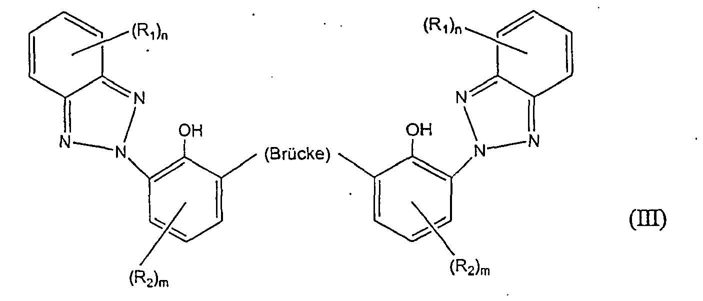 worin die Brücke 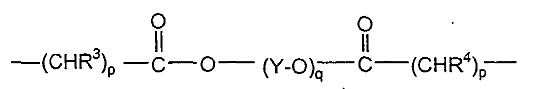 bedeutet,
R¹, R², m und n die für Formel (II) genannte Bedeutung haben,
worin außerdem p eine ganze Zahl von 0 bis 3 ist,
- q: eine ganze Zahl von 1 bis 10 ist,
- Y: -CH₂-CH₂-, -(CH₂)₃-, -(CH₂)₄-, -(CH₂)₅-, -(CH₂)₆-, oder CH(CH₃)-CH₂- ist und
- R³ und R⁴: die für Formel (II) genannte Bedeutung haben.

Weitere geeignete UV-Absorber sind solche, die substituierte Triazine darstellen, wie das 2,4-Bis(2,4-dimethylphenyl)-6-(2-hydroxy-4-n-octyloxyphenyl)-1,3,5-triazin (CYASORB^{®} UV-1164) oder 2-(4,6-Diphenyl-1,3,5-triazin-2-yl)-5-(hexyl)oxyphenol (Tinuvin^{®} 1577). Besonders bevorzugt als UV-Absorber ist 2,2-Methylenbis-(4-(1,1,3,3-tetramethylbutyl)-6-(2H-benztriazol-2-yl)-phenol), das im Handel unter der Bezeichnung Tinuvin^{®} 360 oder Adeka Stab^{®} LA 31 vertrieben wird. Geeignet ist außerdem der nach der WO 96/15102, Beispiel 1 erhaltene UV-Absorber Uvinul^{®} 3030 der allgemeinen Formel (IV) 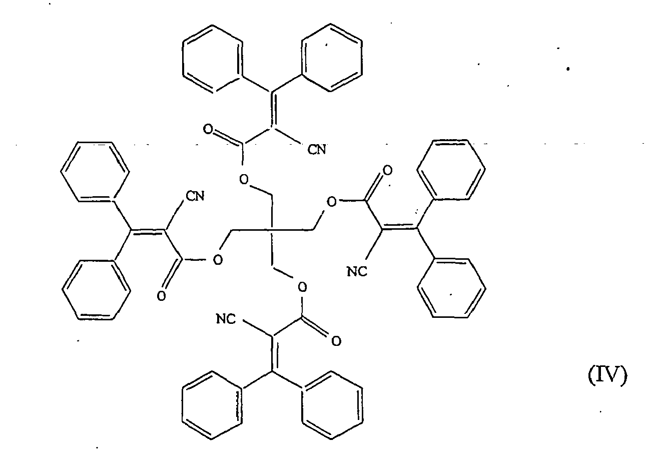 Geeignet sind außerdem die in EP 0500496 A1 genannten UV-Absorber.

Geeignete Stabilisatoren für das erfindungsgemäß verwendete Polycarbonat sind beispielsweise Phosphine, Phosphite oder Si enthaltende Stabilisatoren und weitere in der EP 0 500 496 A1 beschriebene Verbindungen. Beispielhaft seien Triphenylphosphite, Diphenylalkylphosphite, Phenyldialkylphosphite, Tris-(nonylphenyl)phosphit, Tetrakis-(2,4-di-tert.-butylphenyl)-4,4'-biphenylendiphosponit und Triarylphosphit genannt. Besonders bevorzugt sind Triphenylphosphin und Tris-(2,4-di-tert.-butylphenyl)phosphit.

Ferner kann das erfindungsgemäß verwendete Polycarbonat Glycerinmono-fettsäureester enthalten. Diese werden vorzugsweise in Mengen von 0,01 bis 1 Gew. %, besonders bevorzugt 0,02 bis 0,3 Gew.-%, bezogen auf das Gewicht der Formmasse, eingesetzt. Glycerinmonofettsäureester sind Ester des Glycerins mit gesättigten, aliphatischen C₁₀ bis C₂₆-Monocarbonsäuren, vorzugsweise mit gesättigten, aliphatischen C₁₄ bis C₂₂-Monocarbonsäuren. Als Glycerinmonofettsäureester sind sowohl die der primären OH-Funktion des Glycerins als auch die der sekundären OH-Funktion des Glycerins zu verstehen sowie Mischungen dieser beiden isomeren Verbindungsklassen. Die Glycerinmonofettsäureester können herstellungsbedingt weniger als 50 % unterschiedliche Diester und Triester des Glycerins enthalten.

Gesättigte, aliphatische Monocarbonsäuren mit 10 bis 26 C-Atomen sind beispielsweise Caprinsäure, Laurinsäure, Myristinsäure, Palmitinsäure, Stearinsäure, Arachinsäure, Behensäure, Lignocerinsäure und Cerotinsäure. Bevorzugte gesättigte, aliphatische Monocarbonsäuren mit 14 bis 22 C-Atomen sind beispielsweise Myristinsäure, Palmitinsäure, Stearinsäure, Arachinsäure und Behensäure. Besonders bevorzugte gesättigte, aliphatische Monocarbonsäuren sind Palmitinsäure und Stearinsäure.

Ferner kann das erfindungsgemäß verwendete Polycarbonat 0,01 bis 0,5 Gew-% der (Teil)Ester von vier- bis sechswertigen Alkoholen, insbesondere des Pentaerythrits enthalten.

Vierwertige Alkohole sind beispielsweise Pentaerythrit und Mesoerythrit. Fünfwertige Alkohole sind beispielsweise Arabit, Ribit und Xylit. Sechswertige Alkohole sind beispielsweise Mannit, Glucit (Sorbit) und Dulcit.

Die Ester sind die Monoester, Diester, Triester, Tetraester gegebenenfalls Pentaester und Hexaester oder deren Mischungen, insbesondere statistische Mischungen, aus gesättigten, aliphatischen C₁₀ bis C₂₆-Monocarbonsäuren, vorzugsweise mit gesättigten, aliphatischen C₁₄ bis C₂₂-Monocarbonsäuren. Die kommerziell erhältlichen Fettsäureester, insbesondere des Pentaerythrits, können herstellungsbedingt <60 % unterschiedlicher Teilester enthalten.

Gesättigte, aliphatische Monocarbonsäuren mit 10 bis 26 C-Atomen sind beispielsweise Caprinsäure, Laurinsäure, Myristinsäure, Palmitinsäure, Stearinsäure, Arachinsäure, Behensäure, Lignocerinsäure und Cerotinsäure.

Bevorzugte gesättigte, aliphatische Monocarbonsäuren mit 14 bis 22 C-Atomen sind beispielsweise Myristinsäure, Palmitinsäure, Stearinsäure, Arachinsäure und Behensäure.

Besonders bevorzugt sind gesättigte, aliphatische Monocarbonsäuren wie Palmitinsäure und Stearinsäure.

Die gesättigten, aliphatischen C₁₀ bis C₂₆-Carbonsäuren und die Fettsäureester sind als solche entweder literaturbekannt oder nach literaturbekannten Verfahren herstellbar. Beispiele für Pentaerythritfettsäureester sind die der besonders bevorzugten, vorstehend genannten Monocarbonsäuren.

Besonders bevorzugt sind Ester des Pentaerythrits mit Stearinsäure und Palmitinsäure.

Es hat sich ferner als günstig erwiesen, dem erfindungsgemäß verwendeten Polycarbonat Verbindungen der allgemeinen Formel (V) 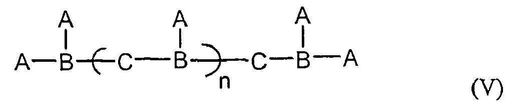 zuzugeben, worin A ein C₁₀ bis C₄₀-Fettsäurerest, vorzugsweise C₂₂ bis C₃₄-Fettsäurerest, B ein dreiwertiger Alkohol mit 3 bis 20, vorzugsweise 5 bis 10, Kohlenstoffatomen, C ein Dicarbonsäurerest mit 4 bis 40, vorzugsweise 5 bis 10, Kohlenstoffatomen und n eine ganze Zahl von 0 bis 15 bedeutet. Diese Verbindungen sind im Handel erhältlich.

Sie lassen sich problemlos mit dem erfindungsgemäß verwendeten Polycarbonat verarbeiten und zeigen in den als Produkt erhaltenen Formkörpern keine Beeinträchtigungen. Vorzugsweise kann die Konzentration der Formel (V) in der Polycarbonatformmasse 0,02 bis 1 Gew.-%, insbesondere 0,05 bis 0,6 Gew.-%, bezogen auf das Gewicht der Formmasse, betragen.

Zur Modifizierung der Eigenschaften können dem erfindungsgemäß verwendeten Polycarbonat weitere übliche Additive zugemischt und/oder auf die Oberfläche aufgebracht werden. Üblich Additive sind beispielsweise Füllstoffe, Verstärkungsstoffe, Stabilisatoren wie Thermostabilisatoren, γ-Strahlenstabilisatoren, Antistatika, Fließhilfsmittel, Brandschutzmittel, Farbstoffe und Pigmente. Die genannten und weitere Additive sind beschrieben in Gächter, Müller, Kunststoff-Additive, 3. Ausgabe, Hanser-Verlag, München, Wien, 1989.

Beispiele für Antistatika sind kationaktive Verbindungen, beispielsweise quartäre Ammonium-, Phosphonium- oder Sulfoniumsalze, anionaktive Verbindungen, beispielsweise Alkylsulfonate, Alkylsulfate, Alkylphosphate, Carboxylate in Form von Alkali- oder Erdalkalimetallsalzen, nichtionogene Verbindungen, beispielsweise Polyethylenglykolester, Polyethylenglykolether, Fettsäureester, ethoxylierte Fettamine. Bevorzugte Antistatika sind nichtionogene Verbindungen.

Die erfindungsgemäßen Polycarbonat-Massivformkörper können eine Dicke von 0,5 mm bis 15 mm aufweisen. Je nach Anwendungsgebiet können sie auch dicker sein.

Zur Herstellung von Massivplatten durch Extrusion wird das Polycarbonatgranulat dem Fülltrichter eines Extruders zugeführt und gelangt über diesen in das Plastifiziersystem, bestehend aus Schnecke und Zylinder.

Im Plastifiziersystem erfolgt das Fördern und Aufschmelzen des Materials. Die Kunststoffschmelze wird durch eine Breitschlitzdüse gedrückt. Zwischen Plastifiziersystem und Breitschlitzdüse können eine Filtereinrichtung, eine Schmelzpumpe, stationäre Mischelemente und weitere Bauteile angeordnet sein. Die die Düse verlassende Schmelze gelangt auf einen Glättkalander. Im Walzenspalt des Glättkalanders erfolgt die endgültige Formgebung. Die Formfixierung erfolgt letztendlich durch Abkühlung und zwar wechselseitig auf den Glättwalzen und an der Umgebungsluft. Die weiteren Einrichtungen dienen dem Transport, dem Aufbringen von Schutzfolie, dem Ablängen und Ablegen der extrudierten Platten.

Die Erfindung wird durch das folgende Beispiel weiter erläutert.

### Beispiel 1

Zur Extrusion von 6 mm dicken Polycarbonat-Massivplatten einer Breite von 600 mm werden ein lineares hochviskoses Polycarbonat, Makrolon^{®} 3103 (M_{w} etwa 32 000), und ein lineares Polycarbonat mit verringerter Viskosität, Makrolon^{®} 2805 (M_{w} etwa 29 000), eingesetzt.

Die Polycarbonate weisen Melt Volume Raten (MVR) von etwa 6 (Makrolon^{®} 3103) sowie 9,5 (Makrolon^{®} 2805) cm³/10 Min (300°C/1,2 kg) auf, gemessen nach ISO 1133.

Die verwendete Anlage besteht aus
- einem Extruder mit einer Schnecke von 75 mm Durchmesser (D) und einer Länge von 33xD. Die Schnecke weist eine Entgasungszone auf;
- einer Schmelzepumpe;
- einem Umlenkkopf;
- einer Breitschlitzdüse mit 600 mm Breite;
- einem Dreiwalzen-Glättkalander mit horizontaler Walzenanordnung, wobei die dritte Walze um ± 45° gegenüber der Horizontalen schwenkbar ist;
- einer Rollenbahn;
- einer Einrichtung zum beidseitigen Aufbringen von Schutzfolie;
- einer Abzugseinrichtung;
- einer Ablängvorrichtung (Säge);
- einem Ablagetisch.

Von der Düse gelangt die Schmelze auf den Glättkalander, dessen Walzen die in der Tabelle 1 genannte Temperatur aufweisen. Auf dem Glättkalander erfolgt die endgültige Formgebung und Abkühlung des Materials. Anschließend wird die Platte durch einen Abzug transportiert, es wird die Schutzfolie beidseitig aufgebracht, danach erfolgt die Ablängung mittels Säge und die Ablage der Platten.

**Tabelle 1**

| Verfahrensparameter | Vergleich Makrolon^{®} 3103 | Erfindung Makrolon^{®} 2805 |
|---|---|---|
| Temperatur Extruder Z1 | 300°C | 270°C |
| Temperatur Extruder Z2 | 300°C | 270°C |
| Temperatur Extruder Z3 | 270°C | 250°C |
| Temperatur Extruder Z4 | 260°C | 240°C |
| Temperatur Extruder Z5 | 265°C | 240°C |
| Temperatur Extruder Z6 | 280°C | 250°C |
| Temperatur Umlenkkopf | 280°C | 250°C |
| Temperatur Düse/Seitenplatte | 280°C | 270°C |
| Temperatur Düse Z 13 | 280°C | 260°C |
| Temperatur Düse Z 14 | 280°C | 260°C |
| Temperatur Düse Z 15 | 280°C | 260°C |
| Temperatur Düse/Seitenplatte | 280°C | 270°C |
| Temperatur Düse Z 17 | 280°C | 260°C |
| Temperatur Düse Z 18 | 280°C | 260°C |
| Temperatur Düse Z 19 | 280°C | 260°C |
| | | |
| Drehzahl Extruder | 96 min⁻¹ | 90 min⁻¹ |
| | | |
| Drehzahl Schmelzepumpe | 106 min⁻¹ | 106 min⁻¹ |
| | | |
| Temperatur Walze 1 | 121°C | 121°C |
| Temperatur Walze 2 | 124°C | 124°C |
| Temperatur Walze 3 | 126°C | 126°C |
| | | |
| Kalandergeschwindigkeit | 0,540 m/min | 0,540 m/min |
| | | |
| Durchsatz | 150 kg/h | 150 kg/h |
| Platten-Breite/-Dicke | 600 mm/6 mm | 600 mm/6 mm |

Die verbesserten optischen Eigenschaften der erfindungsgemäß durch Extrusion erhaltenen massiven Platten sind in der Tabelle 2 dargestellt.

**Tabelle 2**

| Platte aus | Ablenkwinkel α_{ε} (min) DIN 52305-A-AS | Brechwert D_{ε} (min) DIN 52305-A-AZ |
|---|---|---|
| Makrolon^{®} 3103 (Vergleichsbasis) | 2,14 | 0,0720 |
| Makrolon^{®} 2805 | 1,69 | 0,0310 |

Kleinere Werte für α_{ε} und D_{ε} dokumentieren die verringerte optische Verzerrung der erfindungsgemäß erhaltenen Platten aus Makrolon^{®} 2805. Die optische Verzerrung wurde visuell an Hand einer Schräglinienprojektion nach DIN 52305 (ε = 55°) bestimmt.

## Patentansprüche

1. Einschichtige Polycarbonatplatte mit einem Ablenkwinkel α_{ε} (min) nach DIN 52305-A-AS von ≤ 1,7 und einem Brechwert D_{ε} (min) nach DIN 52305-A-AZ von ≤ 0,04, erhältlich durch Extrusion einer Formmasse enthaltend ein lineares Polycarbonat eines mittleren Molekulargewichts M̅_{W} von 28.000 bis 30.000.

2. Kraftfahrzeugverglasung, enthaltend eine einschichtige Polycarbonatplatte nach Anspruch 1.

3. Verwendung einer einschichtigen Polycarbonatplatte nach einem der Ansprüche 1 oder 2 als Sicherheitsverscheibung, als Verscheibung in Dächern, Lärmschutzwänden und für Werbeflächen.

## Claims

1. Single-layered polycarbonate sheet having a deviation angle α_{ε} (min) according to DIN 52305-A-AS of ≤ 1.7 and a refracting power D_{ε} (min) according to DIN 52305-A-AZ of ≤ 0.04, obtainable by extrusion of a moulding composition comprising a linear polycarbonate having an average molecular weight M̅_{w} of 28,000 to 30,000.

2. Motor vehicle glazing comprising a single-layered polycarbonate sheet according to claim 1.

3. Use of a single-layered polycarbonate sheet according to one of claims 1 or 2 as a safety screen, as a screen in roofs, noise protection walls and for advertising surfaces.

## Revendications

1. Plaque de polycarbonate monocouche avec un angle de déviation α_{ε} (min) selon DIN 52305-A-AS de ≤ 1,7 et un indice de réfraction D_{ε} (min) selon DIN 52305-A-AZ de on ≤ 0,04, obtenue par extrusion d'une matière à mouler contenant un polycarbonate linéaire d'un poids moléculaire moyen M̅_{w} de 28.000 à 30.000.

2. Vitrage de véhicule automobile contenant une plaque de polycarbonate monocouche suivant la revendication 1.

3. Utilisation d'une plaque de polycarbonate monocouche suivant l'une des revendications 1 ou 2 comme vitrage de sécurité, comme vitrage de toitures, murs antibruit et pour des surfaces publicitaires.
